# EUROPEAN PATENT APPLICATION

(11) **EP 3 412 593 A1**
(43) Date of publication of application: **12.12.2018**
(21) Application number: 17747605.8
(22) Date of filing: 03.02.2017
(51) Int. Cl.: B65D 65/02, B32B 1/02, B32B 7/02, B32B 27/30, B32B 27/32, B65D 65/40, B65D 81/24, B65D 75/58

(54) **CYLINDRICAL MOLDED BODY, BARRIER STOPPER, AND CONTAINER WITH BARRIER STOPPER**

(30) Priority: 05.02.2016 JP 2016021239
(71) Applicant: Asahi Kasei Kabushiki Kaisha, Chiyoda-ku Tokyo 101-8101 (JP)
(72) Inventor: TAKAGI, Naoki, Tokyo 101-8101 (JP); TAKASU, Kaoru, Tokyo 101-8101 (JP)
(74) Representative: D Young & Co LLP
(86) International application number: PCT/JP2017/004112
(87) International publication number: WO 2017/135454

(57) **Abstract**

A cylindrical molded article having a resin layer comprising a barrier resin, the barrier resin having a vinylidene chloride copolymer, and the cylindrical molded article having a total thickness of 100 µm or more.

## Description

### Technical Field

The present invention relates to a cylindrical molded article, a barrier plug, and a container with a barrier plug.

### Background Art

Conventionally, plastic soft packaging bags in various forms are developed, and packaging products, in which various foods and drinks, for example, baby foods, liquid foods, infusion bags, juices, jelly-like drinks, nutritional drinks, drinking water, teas, coffee drinks, milk, seasonings, oils, cosmetics, and others, are filled and packaged, are sold. Particularly, in recent years, for the above plastic soft packaging bags in various forms such as self-supporting bags, gadget type bags, and others, packaging products obtained by attaching a plug to an opening at one side of the bag body, and the like have also been proposed because of their convenience. These packaging products are referred to as pouches with spouts, or the like, are easy to handle, also have resealability and the like, and are in increasing demand.

However, depending on the contents, many contents deteriorate due to oxygen, water, and the like, and using, as films constituting these bags and containers, laminated materials whose gas barrier properties against oxygen and water vapor are improved by the lamination of aluminum foil, or the formation of barrier layers by coating (vapor deposition) with silicon oxide, aluminum oxide, diamond-like carbon, or the like is often seen.

On the other hand, some containers containing drugs or the like, such as infusion bags, are provided with liquid transport tubes in the packaging thereof. In bags and containers using packaging materials (films) provided with these barrier layers in this manner, the entire barrier properties can be improved, but in the plug and tube portions provided in these bags and containers, measures for gas barrier property improvement are not taken, and therefore for most gas transmission to the contents, the influence of these plugs and tubes is strong, which is not negligible in the suppression of the deterioration of the contents. For these problems, many measures for suppressing deterioration due to gas transmission and enhancing the storage properties are proposed (for example, see Patent Literatures 1 to 3).

### Citation List

### Patent Literature

Patent Literature 1: Japanese Patent Laid-Open No. 2012-162272
Patent Literature 2: Japanese Patent Laid-Open No. 2009-292492
Patent Literature 3: Japanese Patent Laid-Open No. 2006-1623

### Summary of Invention

### Technical Problem

However, problems of conventional cylindrical molded articles such as plugs are that the oxygen barrier properties decrease in the case of storage under high humidity, and the water vapor barrier properties, and the oxygen barrier properties when hot water treatment such as boiling or retorting is performed decrease.

In order to solve the problem of the decrease in oxygen barrier properties under high humidity, attaching a winding of a vapor-deposited film or the like resistant to humidity to the cylindrical portion of a plug and injection-molding it is also considered. However, in this case, the problem of gas intrusion from an adhesive layer and a butt seam sealing portion in winding, and the problem of the cracking of the vapor-deposited layer in winding arise anew. Further, the problem of the transmission and leakage of the smell of contents arises.

In addition, a cylindrical molded article such as a plug requires cutting processing, and in terms of the prevention of the mixing of the resin into contents, and productivity during an additional step after cutting, for example, insert injection molding, it is considered that the fine appearance of the cut surface of the cylindrical molded article is important. Further, a cylindrical molded article such as a plug requires continuous molding, and therefore the stability of molding is important. However, these have not been considered much until now.

The present invention has been made in view of the above problems, and it is an object of the present invention to provide a cylindrical molded article, a barrier plug, and a container with a barrier plug excellent in water vapor barrier properties, oxygen barrier properties, and smell retention properties for smelling substances.

### Solution to Problem

The present inventors have studied diligently in order to solve the above problems, and as a result found that the above problems can be solved by using a cylindrical barrier material having a balance of both the oxygen transmission rate and the water vapor transmission rate, leading to the completion of the present invention.

Specifically, the present invention is as follows.
[1] A cylindrical molded article comprising a resin layer comprising a barrier resin,
   the barrier resin comprising a vinylidene chloride copolymer, and
   the cylindrical molded article having a total thickness of 100 µm or more.
[2] The cylindrical molded article according to [1], comprising an inside layer and an outside layer,
   the inside layer comprising a polyolefin-based resin, and
   the outside layer being the resin layer.
[3] The cylindrical molded article according to [1], having an inside layer, one or more intermediate layers, and an outside layer,
   the inside layer comprising a polyolefin-based resin, and
   the outside layer and/or the intermediate layer being the resin layers.
[4] The cylindrical molded article according to any one of [1] to [3], wherein a thickness of the resin layer comprising the barrier resin is 20% or more based on the total thickness of the cylindrical molded article.
[5] The cylindrical molded article according to any one of [1] to [4], wherein the vinylidene chloride copolymer comprises a vinylidene chloride-methyl acrylate copolymer, and
   a copolymerization ratio of the methyl acrylate is 3 to 9% by mass based on a total amount of the vinylidene chloride-methyl acrylate copolymer.

### Advantageous Effects of Invention

According to the present invention, it is possible to provide a cylindrical molded article, a barrier plug, and a container with a barrier plug excellent in water vapor barrier properties, oxygen barrier properties, and smell retention properties for smelling substances.

### Brief Description of Drawings

[Figure 1] Figure 1 shows a schematic view showing a specific example of a barrier plug in the present embodiment.
[Figure 2] Figure 2 shows a schematic view showing a specific example of a liquid transport tube in the present embodiment.
[Figure 3] Figure 3 shows a schematic view showing a specific example of an tube for storing ink in the present embodiment.

### Description of Embodiments

An embodiment of the present invention (hereinafter referred to as "the present embodiment") will be described in detail below, but the present invention is not limited to this, and various modifications can be made without departing from the spirit thereof.

### [Cylindrical Molded Article]

The cylindrical molded article in the present embodiment has a resin layer comprising a barrier resin, the above barrier resin comprises a vinylidene chloride copolymer, and the cylindrical molded article in the present embodiment has a total thickness of 100 µm or more. When the cylindrical molded article in the present embodiment has such a configuration, the oxygen transmission rate and water vapor transmission rate of the cylindrical molded article decrease more. The "cylindrical molded article" is not particularly limited as long as it is a molded article comprising a cylindrically molded resin layer comprising a barrier resin, and having two or more openings.

By using the cylindrical molded article in the present embodiment as a plug for a packaging material, or a container with a plug, for foods, drugs, or the like, the deterioration of foods, drinks, drugs, or the like that dislike the intrusion of gases such as oxygen and water vapor can be prevented, and long-term storage can be allowed while hygiene and safety are kept. In addition, the cylindrical molded article in the present embodiment can have stability during extrusion and cross-sectional fine appearance during cutting processing.

### [Resin Layer]

The oxygen transmission rate of the resin layer at 23°C and 65% RH is preferably 10000 mL·µm/m²·24 hrs·MPa or less, more preferably 800 mL·µm/m²·24 hrs·MPa or less, further preferably 500 mL·µm/m²·24 hrs·MPa or less, still further preferably 450 mL·µm/m²·24 hrs·MPa or less, still more preferably 350 mL·µm/m²·24 hrs·MPa or less, particularly preferably 300 mL·µm/m²·24 hrs·MPa or less, and most preferably 250 mL·µm/m²·24 hrs·MPa or less. The lower limit of the oxygen transmission rate of the resin layer at 23°C and 65% RH is not particularly limited and is 0 mL·µm/m²·24 hrs·MPa. As used herein, "RH" means relative humidity.

When the oxygen transmission rate of the resin layer at 23°C and 65% RH is 10000 mL·µm/m²·24 hrs·MPa or less, the suppression of the deterioration of contents, and the property of keeping the freshness of contents tend to improve more. The oxygen transmission rate of the resin layer at 23°C and 65% RH can be decreased by selecting a resin layer having better barrier properties, and specifically, by using a vinylidene chloride copolymer, the oxygen transmission rate can be significantly decreased. The oxygen transmission rate of the resin layer at 23°C and 65% RH can be measured by a method described in Examples. Here, the "resin having barrier properties" is not particularly limited, and examples thereof include ethylene-vinyl alcohol copolymers, polyamide-based resins, polychlorotrifluoroethylene-based resins, and polyacrylonitrile-based resins.

The water vapor transmission rate of the resin layer at 38°C and 90% RH is preferably 1000 g·µm/m²·24 hrs or less, more preferably 500 g·µm/m²·24 hrs·MPa or less, further preferably 300 g·µm/m²·24 hrs·MPa or less, still further preferably 200 g·µm/m²·24 hrs·MPa or less, still more preferably 100 g·µm/m²·24 hrs·MPa or less, particularly preferably 50 g·µm/m²·24 hrs·MPa or less, and most preferably 25 g·µm/m²·24 hrs·MPa or less. The lower limit of the water vapor transmission rate of the resin layer at 38°C and 90% RH is not particularly limited and is 0 g·µm/m²·24 hrs·MPa.

When the water vapor transmission rate of the resin layer at 38°C and 90% RH is 1000 g·µm/m²·24 hrs·MPa or less, the suppression of the deterioration of contents, and the property of keeping the freshness of contents tend to improve more. The water vapor transmission rate of the resin layer at 38°C and 90% RH can be decreased by selecting a resin layer having better barrier properties, and specifically, by using a vinylidene chloride copolymer, the water vapor transmission rate can be significantly decreased. The water vapor transmission rate of the resin layer at 38°C and 90% RH can be measured by a method described in Examples.

A numerical value obtained by dividing the oxygen transmission rate of the resin layer at 23°C and 65% RH by the oxygen transmission rate at 23°C and a high humidity of 90% RH and multiplying the quotient by 100 was evaluated as the rate of decrease in the oxygen transmission rate, and the rate of decrease in the oxygen transmission rate of the resin layer without the deterioration of oxygen barrier properties due to humidity was defined as 100%. The rate of decrease in the oxygen transmission rate is preferably 80 to 100%, more preferably 90 to 100%, and further preferably 95 to 100%. In the step of packaging contents in a container, from the viewpoint of sterilization and disinfection, contents to be packaged are enclosed in a container in a heated state, or a container in which a food is enclosed is heated. When the rate of decrease in the oxygen transmission rate is within the above range, a decrease in barrier properties such as the oxygen transmission rate tends to be able to be more suppressed also in such a case. The rate of decrease in the oxygen transmission rate can be controlled by the selection of a resin, and specifically, by using a vinylidene chloride copolymer, the rate of decrease in the oxygen transmission rate can be significantly decreased.

The thickness of the resin layer is preferably 5 to 1500 µm, more preferably 10 to 1000 µm, further preferably 25 to 700 µm, and particularly preferably 50 to 500 µm. When the thickness of the resin layer is within the above range, the cylindrical molded article can be used for more applications.

The total thickness of the cylindrical molded article is 100 µm or more, preferably 200 µm or more, and more preferably 250 µm or more. In addition, the upper limit of the total thickness of the cylindrical molded article is not particularly limited but is preferably 1500 µm or less, more preferably 1000 µm or less, further preferably 700 µm or less, and particularly preferably 600 µm or less. When the thickness of the cylindrical molded article is within the above range, a self-supporting shape of the cylindrical molded article can be kept, and the cylindrical molded article can be used for more applications.

For the thickness of the resin layer comprising the barrier resin, the lower limit of the thickness is preferably 20% or more, more preferably 30% or more, and further preferably 40% based on the total thickness of the cylindrical molded article. In addition, the upper limit of the thickness is preferably 100% or less, more preferably 80% or less, and further preferably 60% or less. When the thickness of the resin layer is within the above range, the oxygen transmission rate and the water vapor transmission rate tend to improve more.

The inner diameter of the cylindrical molded article can be appropriately adjusted according to its application, is not particularly limited, and may be a diameter of 1 to 100 mm, or a diameter of 100 mm or more depending on the large container. For example, in the case of a narrow cylindrical molded article used for an tube for storing ink or the like for a ballpoint pen, a highlighter, or the like, one in which the inner diameter of the cylindrical molded article is 1 mm to 5 mm, and the thickness of the cylindrical molded article is 0.3 mm to 2 mm is preferred. In addition, for example, in the case of a bag and a container with a barrier plug characterized by being equipped with a barrier plug and sealed, those in which the inner diameter of the cylindrical molded article is 5 mm to 15 mm, and the thickness of the cylindrical molded article is 0.3 mm to 2 mm are preferred. The barrier plug can be manufactured by subjecting the cylindrical molded article to insert injection molding or the like with respect to a body.

### (Barrier Resin)

The resin layer comprises a barrier resin, and the resin layer is preferably composed of a barrier resin. The barrier resin comprises a vinylidene chloride copolymer, and may comprise a resin other than a vinylidene chloride copolymer as required. Of these, the barrier resin is preferably composed of a vinylidene chloride copolymer. By using a vinylidene chloride copolymer, the oxygen transmission rate and the water vapor transmission rate can be decreased in very low ranges compared with other resins. Particularly, advantages of a vinylidene chloride copolymer are that it is excellent in water vapor non-transmission properties, and a decrease in oxygen non-transmission properties due to moisture absorption is also less likely to occur. In addition, the cylindrical molded article in the present embodiment may have a first resin layer comprising a vinylidene chloride copolymer as a barrier resin, and a second resin layer comprising a resin other than a vinylidene chloride copolymer as a barrier resin. The barrier resin other than a vinylidene chloride copolymer is not particularly limited, and examples thereof include vinylidene chloride homopolymers, ethylene-vinyl alcohol copolymers, polyamide-based resins, polychlorotrifluoroethylene-based resins, and polyacrylonitrile-based resins. By using such a barrier resin, the water vapor non-transmission properties and the oxygen non-transmission properties tend to improve more. One barrier resin other than a vinylidene chloride copolymer may be used alone, or two or more barrier resins other than vinylidene chloride copolymers may be used in combination.

### (Vinylidene Chloride Copolymer)

A vinylidene chloride copolymer is a copolymer of a vinylidene chloride monomer and a monomer copolymerizable with the vinylidene chloride monomer. The monomer copolymerizable with the vinylidene chloride monomer is not particularly limited, and examples thereof include vinyl chloride; acrylates such as methyl acrylate and butyl acrylate; acrylic acid; methacrylates such as methyl methacrylate and butyl methacrylate; methacrylic acid; methylacrylonitrile; and vinyl acetate. Among these, methyl acrylate and methylacrylonitrile are preferred from the viewpoint of the balance between water vapor non-transmission properties and oxygen non-transmission properties and extrusion processability. One of these copolymerizable monomers may be used alone, or two or more of these copolymerizable monomers may be used in combination.

The comonomer content of a vinylidene chloride-acrylate copolymer, a vinylidene chloride-methacrylate copolymer, and a vinylidene chloride-methylacrylonitrile copolymer is preferably 1 to 35% by mass, more preferably 1 to 25% by mass, further preferably 2 to 15.5% by mass, still further preferably 2 to 10% by mass, still more preferably 3 to 9% by mass, particularly preferably 4 to 8% by mass, and most preferably 5 to 7% by mass. When the comonomer content of the vinylidene chloride copolymer is 1% by mass or more, the melting properties during extrusion tend to improve more. In addition, when the comonomer content of the vinylidene chloride copolymer is 35% by mass or less, the water vapor non-transmission properties and the oxygen non-transmission properties tend to improve more.

Furthermore, the comonomer (vinyl chloride) content of a vinylidene chloride-vinyl chloride copolymer is preferably 1 to 40% by mass, more preferably 1 to 30% by mass, further preferably 1 to 21% by mass, still further preferably 3.5 to 18.5% by mass, still more preferably 6 to 16% by mass, and particularly preferably 8.5 to 13.5% by mass. When the comonomer content of the vinylidene chloride copolymer is 1% by mass or more, the melting properties during extrusion tend to improve more. In addition, when the comonomer content of the vinylidene chloride copolymer is 40% by mass or less, the water vapor non-transmission properties and the oxygen non-transmission properties tend to improve more.

The glass transition temperature (Tg) of the vinylidene chloride copolymer is preferably -10°C or more, more preferably -7°C or more, and further preferably -2°C or more. When Tg is equal to or more than the above lower limit, the stability during extrusion tends to be excellent. In addition, Tg is preferably 18°C or less, more preferably 15°C or less, and further preferably 13°C or less. When Tg is equal to or less than the above upper limit, the cross-sectional fine appearance during cutting processing tends to be better.

The weight average molecular weight (Mw) of the vinylidene chloride copolymer is preferably 50,000 to 150,000, more preferably 60,000 to 130,000, and further preferably 70,000 to 100,000. When the weight average molecular weight (Mw) is 50,000 or more, the melt tension required for molding tends to improve more. In addition, when the weight average molecular weight (Mw) is 150,000 or less, melt extrusion in which thermal stability is maintained tends to be possible. In the present embodiment, the weight average molecular weight (Mw) can be obtained by a gel permeation chromatography method (GPC method) using a standard polystyrene calibration curve.

### (Polyolefin)

The polyolefin is not particularly limited, and examples thereof include polyethylene, polypropylene, ethylene-α-olefin copolymers, and ethylene-vinyl acetate copolymers.

The polyethylene is not particularly limited, and examples thereof include low density polyethylene having a density of 0.910 to 0.930 g/cm³ and high density polyethylene having a density of 0.942 g/cm³ or more. Moreover, the polypropylene is not particularly limited, and examples thereof include homopolypropylene and random polypropylene.

The comonomer (vinyl alcohol) content of an ethylene-vinyl alcohol copolymer is preferably 35.0 to 60.0 mol %, more preferably 38.0 to 58.0 mol %, further preferably 38.0 to 54.0 mol %, still further preferably 39.0 to 49.0 mol %, and particularly preferably 41.5 to 46.5 mol %. When the comonomer content is within the above range, the oxygen non-transmission properties tend to improve more. In addition, the degree of saponification of the ethylene-vinyl alcohol copolymer is preferably 98 to 100 mol %, more preferably 99 to 100 mol %. When the degree of saponification is within the above range, the oxygen non-transmission properties tend to improve more.

The content of vinyl acetate in the ethylene-vinyl acetate copolymer is preferably 1 to 35% by mass, more preferably 5 to 30% by mass, further preferably 10 to 25% by mass, and particularly preferably 15 to 20% by mass based on 100% by mass of the ethylene-vinyl acetate copolymer. When the content of vinyl acetate is within the above range, the interlayer adhesive strength tends to improve more in the case of a multilayer configuration.

The content of vinyl alcohol in the ethylene-vinyl alcohol copolymer (polyvinyl alcohol) is preferably 25 to 60% by mass, more preferably 30 to 55% by mass, further preferably 35 to 50% by mass, and particularly preferably 40 to 45% by mass based on 100% by mass of the ethylene-vinyl alcohol copolymer. When the content of vinyl alcohol is within the above range, the rate of decrease in the oxygen transmission rate tends to decrease more.

### (Polyamide)

The polyamide is not particularly limited, and examples thereof include polycaproamide (nylon 6), polydodecanamide (nylon 12), polytetramethylene adipamide (nylon 46), polyhexamethylene adipamide (nylon 66), polyundecamethylene adipamide (nylon 116), polymetaxylylene adipamide (nylon MXD6), polyparaxylylene adipamide (nylon PXD6), polytetramethylene sebacamide (nylon 410), polyhexamethylene sebacamide (nylon 610), polydecamethylene adipamide (nylon 106), polydecamethylene sebacamide (nylon 1010), polyhexamethylene dodecamide (nylon 612), polydecamethylene dodecamide (nylon 1012), polyhexamethylene isophthalamide (nylon 61), polytetramethylene terephthalamide (nylon 4T), polypentamethylene terephthalamide (nylon 5T), poly-2-methylpentamethylene terephthalamide (nylon M-5T), polyhexamethylene hexahydroterephthalamide (nylon 6T (H)) polynonamethylene terephthalamide (nylon 9T), polydecamethylene terephthalamide (nylon 10T), polyundecamethylene terephthalamide (nylon 11T), polydodecamethylene terephthalamide (nylon 12T), polybis(3-methyl-4-aminohexyl)methane terephthalamide (nylon PACMT), polybis(3-methyl-4-aminohexyl)methane isophthalamide (nylon PACMI), polybis(3-methyl-4-aminohexyl)methane dodecamide (nylon PACM12), and polybis(3-methyl-4-aminohexyl)methane tetradecamide (nylon PACM14). Among these, partially aromatic polyamides such as polymetaxylylene adipamide (nylon MXD6) are preferred from the viewpoint of oxygen barrier properties.

### (Other Additives)

The resin layer may comprise other additives such as a known plasticizer, heat stabilizer, colorant, organic lubricant, inorganic lubricant, surfactant, and processing aid as required.

The plasticizer is not particularly limited, and examples thereof include acetyl tributyl citrate, acetylated monoglycerides, and dibutyl sebacate.

The heat stabilizer is not particularly limited, and examples thereof include epoxidized vegetable oils such as epoxidized soybean oil and epoxidized linseed oil, epoxy-based resins, magnesium oxide, and hydrotalcite.

### [Layer Structure]

The cylindrical molded article may have a single-layer structure of a resin layer comprising a barrier resin, or may have a two-layer structure having an inside layer and an outside layer, or a three- or more-layer structure having an inside layer, one or more intermediate layers, and an outside layer, according to the application. When the cylindrical molded article has a two-layer structure, it is preferred that the inside layer comprises a polyolefin-based resin, and the outside layer is the above resin layer. In addition, when the cylindrical molded article has a three-layer structure, an aspect in which the inside layer comprises a polyolefin-based resin, and the outside layer and/or the intermediate layer are the resin layers; an aspect in which the inside layer and the outside layer comprise polyolefin-based resins, and the intermediate layer is the resin layer; and an aspect in which the intermediate layer is the resin layer, the outside layer is a layer comprising a polyolefin-based resin or the resin layer, and the inside layer is not particularly limited are preferred. By having such a configuration, the cylindrical molded article is easily attached to a bag or a container and is also excellent in the fine appearance of a cross section when the cylindrical molded article is cut.

The resin constituting the layer other than the resin layer comprising the barrier resin is not particularly limited, and examples thereof include a polyethylene-based resin (hereinafter also referred to as "PE") such as low density polyethylene, medium density polyethylene, high density polyethylene, or ethylene-α-olefin; a polypropylene-based resin (hereinafter also referred to as "PP") such as homopolymer or a random copolymer, a block copolymer, or other copolymers; an ethylene-vinyl acetate copolymer (hereinafter also referred to as "EVA"); a polyamide-based resin (hereinafter also referred to as "PA"); and an adhesive resin. In addition, the layer other than the resin layer comprising the barrier resin may comprise other components such as an adhesive.

The layer configuration of a cylindrical molded article having a two- or more-layer structure is not particularly limited, and examples thereof include PE/PVDC/PE, PE/PVDC, PVDC/PE, PP/PVDC/PP, PP/PVDC, PVDC/PP, PE/EVA/PVDC/EVA/PVDC, PVDC/EVA/PVDC/EVA/PE, PE/EVA/PVDC, PVDC/EVA/PE, PP/adhesive resin/PVDC/adhesive resin/PP, PP/adhesive resin/PVDC, PVDC/adhesive resin/PP, PE/EVA/PVDC/EVA/PE, PP/EVA/PVDC/EVA/PP, PE/adhesive resin/PVDC, and PE/adhesive resin/PVDC/adhesive resin/PE and preferably include PE/EVA/PVDC/EVA/PE, PE/adhesive resin/PVDC/adhesive resin/PE, PP/EVA/PVDC/EVA/PP, and PP/adhesive resin/PVDC/adhesive resin/PP. The expression "PE/PVDC" indicates that a PE layer and a PVDC layer are laminated from the inside of the cylindrical molded article toward the outside. As particularly preferred layer configurations, PP/adhesive resin/PVDC/adhesive resin/PP has better retort properties, and in the case of PE/EVA/PVDC/EVA/PE, yellowing due to the thermal deterioration of PVDC can be further suppressed in coextrusion.

### [Method for Manufacturing Cylindrical Molded Article]

The cylindrical molded article in the present embodiment can be manufactured by a molding method such as extrusion processing, injection molding processing, or blow molding processing. Among these, extrusion processing in which a resin is melted and extruded is preferred. A cylindrical molded article obtained by cylindrically multilayer-extruding a single layer or two or more layers by extrusion processing is preferred in that the ease of attachment such as joining or sealing, and the dimensional precision are good for processing by injection molding, bag making processing, part attachment processing, or the like using a cylindrical molded article.

The cylindrical molded article extruded in this manner is cut to a predetermined length and used. For example, when the cylindrical molded article is used for a packaging container with a plug referred to as a pouch with a spout, or the like, a barrier plug is molded by insert injection molding or the like using the cylindrical molded article in the present embodiment, and the barrier plug is attached to a bag and a container. The cylindrical molded article at this time is used with a length reaching the interiors of the bag and the container. In addition, when the cylindrical molded article is used for an infusion bag, an insert-injection-molded barrier plug or a tubular cylindrical molded article is attached by performing heat sealing or the like in a state in which it is sandwiched between the inner surfaces of a bag at an end or corner portion of the bag.

The cylindrical molded article in the present embodiment is characterized in that the barrier properties are maintained even if hot water treatment such as boiling or retort treatment is performed.

### [Applications]

The cylindrical molded article in the present embodiment can be preferably used as a barrier plug and a liquid transport tube provided in a container containing a food or the like, a barrier plug and a liquid transport tube provided in a container containing a drug or the like, and in addition a barrier plug and a liquid transport tube provided in a container containing a product other than a food and a drug, and an tube for storing ink for a ballpoint pen, a highlighter, or the like.

### [Barrier Plug and Liquid Transport Tube Provided in Container Containing Food or the Like]

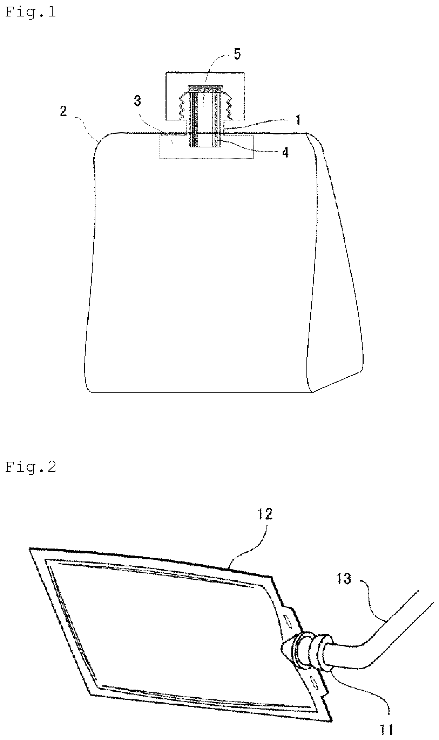

A barrier plug 1 in the present embodiment has a spout body 3 attached to a container 2, and the above cylindrical molded article 4 inserted into the spout body, and the above cylindrical molded article forms a discharge flow path 5 for discharging the contents in the above container to the outside. The barrier plug having the configuration is not limited to a barrier plug used for a container containing a food or the like. A barrier plug provided in a container containing a food or the like is shown in Figure 1.

The liquid transport tube in the present embodiment is a discharge flow path for discharging contents in a container to the outside and is composed of the above cylindrical molded article.

The "container containing a food or the like" is not particularly limited, and examples thereof include containers with plugs, bags with plugs, and bottles with plugs in which drinks, jellies, seasonings such as soy sauce, or the like are enclosed. Problems of conventional plugs are that they have poor oxygen barrier properties and/or water vapor barrier properties, and therefore even if containers themselves containing foods or the like have oxygen barrier properties and water vapor barrier properties, oxygen and water vapor passing through the plugs deteriorate the contents of the packaging, and conversely, the components in the contents of the packaging are released to the outside through the plugs. Additionally, in a food packaging step, from the viewpoint of sterilization and disinfection, a food to be packaged is enclosed in a container in a heated state, or a container in which a food is enclosed is heated. However, a problem is that when the plug is exposed to water vapor produced from the food or the like in the food packaging step, the barrier properties decrease further.

In contrast to this, the barrier plug in the present embodiment can suppress the deterioration of a food or the like in a packaging by comprising the cylindrical molded article.

The resin constituting the spout body is not particularly limited, and examples thereof include a polyethylene-based (hereinafter also referred to as "PE") such as low density polyethylene, medium density polyethylene, high density polyethylene, or ethylene-α-olefin; a polypropylene-based resin (hereinafter also referred to as "PP") such as homo or a random copolymer or a block copolymer; an ethylene-vinyl acetate copolymer (hereinafter abbreviated as EVA); a polyamide-based resin (hereinafter also referred to as "PA"); and an adhesive resin. Among these, polyolefin-based resins are preferred.

Furthermore, the constituent member of the container is not particularly limited, and examples thereof include at least one or more selected from the group consisting of a laminated film having a resin layer composed of a barrier resin having an oxygen transmission rate of 10000 mL·µm/m²·24 hrs·MPa (23°C and 65% RH) or less and a water vapor transmission rate of 1000 g·µm/m²·24 hrs (38°C and 90% RH) or less, a laminated film having an aluminum foil layer, and a metal vapor-deposited film. A container with a barrier plug having such a container and a barrier plug attached to the container is also included in the scope of the present embodiment.

### [Barrier Plug and Liquid Transport Tube Provided in Container Containing Drug or Like]

A barrier plug 11 provided in a container 12 containing a drug or the like, and a liquid transport tube 13 provided in the container 12 containing the drug or the like are shown in Figure 2. The "container containing a drug or the like" is not particularly limited, and examples thereof include packaging in which blood, drops, water, electrolytes, nutrients, or the like are enclosed. Problems of conventional plugs and liquid transport tubes are that they have poor oxygen barrier properties and/or water vapor barrier properties, and therefore even if containers containing drugs or the like have oxygen barrier properties and water vapor barrier properties in themselves, oxygen and water vapor passing through the plugs deteriorate the contents of the packaging, and conversely, the components in the contents of the packaging are released to the outside through the plugs. Additionally, in a drug packaging step, from the viewpoint of sterilization and disinfection, a drug to be packaged is enclosed in a container in a heated state, or a container in which a drug is enclosed is heated. However, a problem is that when the plug is exposed to water vapor produced from the drug or the like in the drug packaging step, the barrier properties decrease further.

In contrast to this, the barrier plug and the liquid transport tube in the present embodiment can suppress the deterioration of a drug or the like in a packaging by comprising the cylindrical molded article.

### [Tube For Storing Ink]

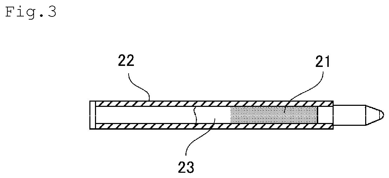

A tube 22 (cylindrical molded article) containing an ink 21 is shown in Figure 3. The tube for storing ink shown in Figure 3 is configured so that by the pressurization of the space 23, the ink is guided to the pen point to allow writing. A problem of conventional tube for storing inks is that they have poor oxygen barrier properties and/or water vapor barrier properties, and therefore the pressure of the space 23 decreases with time.

In contrast to this, the tube for storing ink in the present embodiment can suppress the deterioration of ink stored in the tube by comprising the cylindrical molded article.

### Examples

The present invention will be specifically described below by Examples and Comparative Examples, but the present invention is not limited by these in any way.

### [Fabrication of Substitute Measurement Samples for Measuring Oxygen Transmission Rates, Water Vapor Transmission Rates, and Rates of Decrease in Oxygen Transmission Rates]

In the measurement of the oxygen transmission rates, water vapor transmission rates, and rates of decrease in oxygen transmission rates of cylindrical molded articles, substitute measurement samples imitating the layer structures (types of resins, lamination orders, and thickness ratios of layers) of the cylindrical molded articles were fabricated, and from the measured values of the oxygen transmission rates, water vapor transmission rates, and rates of decrease in oxygen transmission rates of the film samples, the oxygen transmission rates, water vapor transmission rates, and rates of decrease in oxygen transmission rates of the cylindrical molded articles were calculated.

These substitute measurement films were obtained by forming films using a direct inflation apparatus and using a single-layer die for single-layer films and a coextrusion multilayer die for laminated films, so as to provide predetermined configuration ratios. By multiplying the measured values of the oxygen transmission rate, water vapor transmission rate, and rate of decrease in the oxygen transmission rate of a substitute measurement film by the thickness value of the resin layer comprising the barrier resin to provide transmission rates per µm, barrier properties when a cylindrical molded article is formed can be estimated.

### [Oxygen Transmission Rate (OTR)]

The oxygen transmission rate (OTR) was measured in accordance with ASTM D-3985. Specifically, a substitute measurement sample having a predetermined thickness was measured under the conditions of 23°C and 65% RH using Mocon OX-TRAN 2/20. The obtained measured value was multiplied by the thickness of the resin layer comprising the barrier resin to obtain the oxygen transmission rate per thickness of 1 µm (rounded to the nearest whole number).

### [Water Vapor Transmission Rate (WVTR)]

The water vapor transmission rate (WVTR) was measured in accordance with ASTM F-372. Specifically, a substitute measurement sample having a predetermined thickness was measured under the conditions of 38°C and 90% RH using Mocon PERMATRAN-W398. The obtained measured value was multiplied by the thickness of the resin layer comprising the barrier resin to obtain the water vapor transmission rate per thickness of 1 µm (rounded to the nearest whole number).

### [Rate of Decrease in Oxygen Transmission Rate]

The rate of decrease in the oxygen transmission rate was measured in accordance with ASTM D-3985. Specifically, a substitute measurement sample having a predetermined thickness was measured under the conditions of 23°C and 90% RH using Mocon OX-TRAN 2/20. The obtained measured value was multiplied by the thickness of the resin layer comprising the barrier resin to provide the oxygen transmission rate per thickness of 1 µm (rounded to the nearest whole number) under the condition of 90% RH. The rate of decrease in the oxygen transmission rate was obtained by dividing the oxygen transmission rate under the condition of 65% RH by the oxygen transmission rate under the condition of 90% RH (rounding the quotient to the nearest whole number) and multiplying the quotient by 100%.

In Tables 1 to 4, the oxygen transmission rates (mL·µm/m²·day·MPa), water vapor transmission rates (g·µm/m²·day), and rates of decrease in oxygen transmission rates of cylindrical molded articles are described without parentheses, and the oxygen transmission rates (mL/m²·day·MPa) and water vapor transmission rates (g/m²·day) of substitute measurement samples are described with parentheses.

### [Storage Property Evaluation]

50 mL of soy sauce was placed in each of the cylindrical molded articles obtained in the Examples and the Comparative Examples, and dark-stored in a constant temperature and humidity tank adjusted to 40°C and 65% RH for 3 days. The L (lightness), a (green-red hue), and b (blue-yellow hue) of the soy sauce before and after the storage were measured by a color difference meter, and from the Lab value difference, ΔE (color difference) = (ΔL)² + (Δa)² + (Δb)² was obtained (rounded to the nearest whole number), and the degree of discoloration was observed. A case where ΔE was 0 or more and 7 or less could be evaluated as the soy sauce being in a relatively good state with little discoloration of the soy sauce. A case where ΔE was more than 7 and 12 or less could be evaluated as the soy sauce being in a good state. A case where ΔE was more than 12 and 14 or less could be evaluated as the soy sauce being in a usable state though discoloration being visually recognizable. A case where ΔE was more than 14 could be evaluated as the soy sauce being in an unusable state with extreme discoloration.

### [Smell Retention Property Evaluation]

The mouth of each of the cylindrical molded articles obtained in the Examples and the Comparative Examples on one side was closed, and 10 mL of ethanol was placed and hermetically sealed. The cylindrical molded article was placed in a 5 L desiccator in a state in which the cylinder side surface was horizontal, and hermetically sealed. After the desiccator was stored at 40°C for 1 day, the degree of an alcohol smell leaked from the cylindrical molded article into the desiccator was evaluated by the following criteria.
○: There was no alcohol smell at all.
Δ: There was a slight alcohol smell.
×: There was a distinct alcohol smell.

### [Glass Transition Temperature (Tg)]

Measurement was performed using Diamond DSC from PerkinElmer. 5 mg to 10 mg of a sample was taken from each of the resins used in the Examples and the Comparative Examples, and set in the apparatus. From the endothermic curve when the temperature of the sample was increased from -50°C to 190°C, midpoint glass transition temperature was obtained according to JIS K-7121. The temperature increase and decrease was performed at a rate of 10°C/min.

### [Stability during Extrusion]

In extrusion in each of the Examples and the Comparative Examples, the cylindrical molded article discharged from the die and molded was observed, and evaluated by the following criteria.
○: Foreign materials hardly occurred, and molding could be stably continued.
Δ: Foreign materials occurred, but molding could be continued by removal.
×: Many foreign materials occurred, and the continuation of molding was difficult.

### [Cross-Sectional Fine Appearance]

A cross section of each of the cylindrical molded articles (tubes) obtained in the Examples and the Comparative Examples was observed using a microscope (manufactured by KEYENCE), and evaluated by the following criteria.
○: There were no layer cracks or cross sectional disorder.
×: There were layer cracks and cross sectional disorder.

### [Example 1]

A resin composition having 5°C of Tg obtained by mixing 1 wt % of epoxidized soybean oil as a heat stabilizer with a PVDC-A resin with vinylidene chloride (VDC)/methyl acrylate (MA) = 96/4 (% by mass) having a weight average molecular weight of 80,000 (manufactured by Asahi Kasei Chemicals Corporation) was continuously extruded cylindrically using melt extrusion equipment equipped with a cylindrical die. Then, the extruded resin composition was adjusted to an outer diameter of 10 mm in a cold water tank with an outer diameter sizing apparatus to obtain a single-layer tube having a thickness of 300 µm. The stability during extrusion and the cross-sectional fine appearance at this time were evaluated. In addition, the same resin composition was adjusted to a thickness of 30 µm, which was 1/10 of the tube thickness, using a direct inflation apparatus, to obtain a single-layer film (substitute measurement film). The oxygen transmission rate and water vapor transmission rate of this substitute measurement film were measured.

### [Example 2]

A single-layer tube having an outer diameter of 10 mm and a thickness of 300 µm was obtained as in Example 1 except that a PVDC-B resin with vinylidene chloride (VDC)/methyl acrylate (MA) = 92/8 (% by mass) having a weight average molecular weight of 80,000 (manufactured by Asahi Kasei Corporation) and 13°C of Tg was used instead of the PVDC-A resin.

### [Example 3]

A single-layer tube having an outer diameter of 10 mm and a thickness of 300 µm was obtained as in Example 1 except that a PVDC-C resin with vinylidene chloride (VDC)/vinyl chloride (VC) = 89/11 (% by mass) having a weight average molecular weight of 80,000 (manufactured by Asahi Kasei Corporation) and -7°C of Tg was used instead of the PVDC-A resin.

### [Example 4]

A single-layer tube having an outer diameter of 10 mm and a thickness of 100 µm was obtained as in Example 1 except that the thickness was 100 µm.

### [Example 5]

A single-layer tube having an outer diameter of 10 mm and a thickness of 500 µm was obtained as in Example 1 except that the thickness was 500 µm.

### [Example 6]

Low density polyethylene (PE-A (manufactured by Asahi Kasei Corporation, product name F1920)) and a resin composition obtained by mixing 1 wt % of epoxidized soybean oil as a heat stabilizer with the PVDC-A resin were continuously extruded cylindrically using the low density polyethylene (PE-A) for an inside layer and an outside layer and the resin composition for an intermediate layer and using melt extrusion equipment equipped with a coextrusion multilayer cylindrical die. Then, the extruded material was adjusted to an outer diameter of 10 mm in a cold water tank with an outer diameter sizing apparatus to obtain a three-layer tube having a thickness of 600 µm. The stability during extrusion and the cross-sectional fine appearance at this time were evaluated. In addition, adjustment to a total thickness of 60 µm, which was 1/10 of the tube thickness, was made in the same manner by coextrusion multilayer film molding equipment and with the same thickness configuration ratio for the layers to obtain a three-layer film (substitute measurement film). The oxygen transmission rate and water vapor transmission rate of this substitute measurement film were measured.

### [Example 7]

A two-layer tube having an outer diameter of 10 mm and a thickness of 400 µm was obtained as in Example 6 except that the outside layer composed of the low density polyethylene (PE-A) was not provided.

### [Example 8]

A three-layer tube having an outer diameter of 10 mm and a thickness of 500 µm was obtained as in Example 6 except that the PVDC-B resin was used instead of the PVDC-A resin.

### [Example 9]

A two-layer tube having an outer diameter of 10 mm and a thickness of 400 µm was obtained as in Example 7 except that the PVDC-B resin was used instead of the PVDC-A resin.

### [Example 10]

A three-layer tube having an outer diameter of 10 mm and a thickness of 500 µm was obtained as in Example 6 except that the high density polyethylene (PE-B (manufactured by Asahi Kasei Chemicals Corporation, product name F371)) was used instead of the low density polyethylene (PE-A).

### [Example 11]

A two-layer tube having an outer diameter of 10 mm and a thickness of 400 µm was obtained as in Example 7 except that the high density polyethylene (PE-B) was used instead of the low density polyethylene (PE-A).

### [Example 12]

The low density polyethylene (PE-A), an ethylene-vinyl acetate copolymer (EVA-A (manufactured by Nippon Unicar Company Limited, product name NUC3765D)), a resin composition obtained by mixing 1 wt % of epoxidized soybean oil as a heat stabilizer with the PVDC-A resin, the ethylene-vinyl acetate copolymer (EVA-A), and the low density polyethylene (PE-A) were continuously extruded cylindrically in this order from the inside using melt extrusion equipment equipped with a coextrusion multilayer cylindrical die. Then, the extruded material was adjusted to an outer diameter of 10 mm in a cold water tank with an outer diameter sizing apparatus to obtain a five-layer tube having a thickness of 600 µm. The stability during extrusion and the cross-sectional fine appearance at this time were evaluated. In addition, adjustment to a total thickness of 60 µm, which was 1/10 of the tube thickness, was made in the same manner by coextrusion multilayer film molding equipment with the same thickness configuration ratio for the layers to obtain a five-layer film (substitute measurement film). The oxygen transmission rate and water vapor transmission rate of this substitute measurement film were measured.

### [Example 13]

A five-layer tube having an outer diameter of 10 mm and a thickness of 600 µm was obtained as in Example 12 except that the PVDC-B resin (manufactured by Asahi Kasei Corporation) was used instead of the PVDC-A resin.

### [Example 14]

A five-layer tube having an outer diameter of 10 mm and a thickness of 600 µm was obtained as in Example 12 except that the PVDC-C resin (manufactured by Asahi Kasei Corporation) was used instead of the PVDC-A resin.

### [Example 15]

A five-layer tube having an outer diameter of 10 mm and a thickness of 600 µm was obtained as in Example 12 except that a PVDC-D resin with vinylidene chloride (VDC)/methyl acrylate (MA) = 90/10 (% by mass) having a weight average molecular weight of 80,000 (manufactured by Asahi Kasei Corporation) and 14°C of Tg was used instead of the PVDC-A resin.

### [Example 16]

A five-layer tube having an outer diameter of 10 mm and a thickness of 600 µm was obtained as in Example 12 except that a PVDC-E resin with vinylidene chloride (VDC)/vinyl chloride (VC) = 95/5 (% by mass) having a weight average molecular weight of 80,000 (manufactured by Asahi Kasei Corporation) and -8°C of Tg was used instead of the PVDC-A resin.

### [Example 17]

The low density polyethylene (PE-A), the ethylene-vinyl acetate copolymer (EVA-A), and a resin composition obtained by mixing 1 wt % of epoxidized soybean oil as a heat stabilizer with the PVDC-A resin were continuously extruded cylindrically using the low density polyethylene (PE-A) for an inside layer, the ethylene-vinyl acetate copolymer (EVA-A) for an intermediate layer, and the resin composition for an outside layer and using melt extrusion equipment equipped with a coextrusion multilayer cylindrical die. Then, the extruded material was adjusted to an outer diameter of 10 mm in a cold water tank with an outer diameter sizing apparatus to obtain a three-layer tube having a thickness of 400 µm. The stability during extrusion and the cross-sectional fine appearance at this time were evaluated. In addition, adjustment to a total thickness of 40 µm, which was 1/10 of the tube thickness, was made in the same manner by coextrusion multilayer film molding equipment with the same thickness configuration ratio for the layers to obtain a three-layer film (substitute measurement film). The oxygen transmission rate and water vapor transmission rate of this substitute measurement film were measured.

### [Example 18]

A five-layer tube having an outer diameter of 10 mm and a thickness of 600 µm was obtained as in Example 12 except that an ethylene-vinyl acetate copolymer (EVA-B (manufactured by Nippon Unicar Company Limited, product name NUC-3758)) was used instead of the ethylene-vinyl acetate copolymer (EVA-A).

### [Example 19]

A three-layer tube having an outer diameter of 10 mm and a thickness of 400 µm was obtained as in Example 17 except that the ethylene-vinyl acetate copolymer (EVA-B) was used instead of the ethylene-vinyl acetate copolymer (EVA-A) .

### [Example 20]

A three-layer tube having an outer diameter of 10 mm and a thickness of 500 µm was obtained as in Example 6 except that homopolypropylene (PP-A (manufactured by SunAllomer Ltd., product name PL500A)) was used instead of the low density polyethylene (PE-A).

### [Example 21]

Adjustment to an outer diameter of 10 mm was made to obtain a two-layer tube having a thickness of 400 µm, as in Example 20 except that the outside layer composed of the homopolypropylene (PP-A) was not provided.

### [Example 22]

The homopolypropylene (PP-A), an adhesive resin, a resin composition obtained by mixing 1 wt % of epoxidized soybean oil as a heat stabilizer with the PVDC-A resin, an adhesive resin, and the homopolypropylene (PP-A) were continuously extruded cylindrically in this order from the inside using melt extrusion equipment equipped with a coextrusion multilayer cylindrical die. Then, the extruded material was adjusted to an outer diameter of 10 mm in a cold water tank with an outer diameter sizing apparatus to obtain a five-layer tube having a thickness of 600 µm. The stability during extrusion and the cross-sectional fine appearance at this time were evaluated. In addition, adjustment to a total thickness of 60 µm, which was 1/10 of the tube thickness, was made in the same manner by coextrusion multilayer film molding equipment with the same thickness configuration ratio for layers to obtain a five-layer film (substitute measurement film). The oxygen transmission rate and water vapor transmission rate of this substitute measurement film were measured.

### [Example 23]

A five-layer tube having an outer diameter of 10 mm and a thickness of 600 µm was obtained as in Example 22 except that the PVDC-B resin (manufactured by Asahi Kasei Corporation) was used instead of the PVDC-A resin.

### [Example 24]

A five-layer tube having an outer diameter of 10 mm and a thickness of 600 µm was obtained as in Example 22 except that the PVDC-C resin (manufactured by Asahi Kasei Corporation) was used instead of the PVDC-A resin.

### [Example 25]

A five-layer tube having an outer diameter of 10 mm and a thickness of 600 µm was obtained as in Example 12 except that the PVDC-D resin (manufactured by Asahi Kasei Corporation) was used instead of the PVDC-A resin.

### [Example 26]

A five-layer tube having an outer diameter of 10 mm and a thickness of 600 µm was obtained as in Example 12 except that the PVDC-E resin (manufactured by Asahi Kasei Corporation) was used instead of the PVDC-A resin.

### [Example 27]

A five-layer tube having an outer diameter of 10 mm and a thickness of 600 µm was obtained as in Example 22 except that random polypropylene (PP-B (manufactured by SunAllomer Ltd., product name PB222A)) was used instead of the homopolypropylene (PP-A).

### [Example 28]

The random polypropylene (PP-B), an adhesive resin, and a resin composition obtained by mixing 1 wt % of epoxidized soybean oil as a heat stabilizer with the PVDC-A resin were continuously extruded cylindrically using the random polypropylene (PP-B) for an inside layer, the adhesive resin for an intermediate layer, and the resin composition for an outside layer and using melt extrusion equipment equipped with a coextrusion multilayer cylindrical die. Then, the extruded material was adjusted to an outer diameter of 10 mm in a cold water tank with an outer diameter sizing apparatus to obtain a three-layer tube having a thickness of 400 µm. The stability during extrusion and the cross-sectional fine appearance at this time were evaluated. In addition, adjustment to a total thickness of 40 µm, which was 1/10 of the tube thickness, was made in the same manner by coextrusion multilayer film molding equipment with the same thickness configuration ratio for layers to obtain a three-layer film (substitute measurement film). The oxygen transmission rate and water vapor transmission rate of this substitute measurement film were measured.

### [Example 29]

A five-layer tube having an outer diameter of 10 mm and a thickness of 500 µm was obtained as in Example 12 except that outside layers composed of an adhesive resin and an ethylene vinyl alcohol copolymer (EVOH) were provided instead of the outside layers composed of EVA-A and the low density polyethylene (PE-A).

### [Comparative Example 1]

A single-layer tube having an outer diameter of 10 mm and a thickness of 150 µm was obtained as in Example 1 except that an ethylene vinyl alcohol copolymer was used instead of the PVDC-A resin, and the thickness was 150 µm. The stability during extrusion and the cross-sectional fine appearance at this time were evaluated. In addition, adjustment to a thickness of 15 µm, which was 1/10 of the tube thickness, was made in the same manner using a melt extrusion machine, to obtain a single-layer film (substitute measurement film). The oxygen transmission rate and water vapor transmission rate of this substitute measurement film were measured.

### [Comparative Example 2]

A single-layer tube having an outer diameter of 10 mm and a thickness of 150 µm was obtained as in Example 1 except that an MXD6 polyamide resin (PA (manufactured by MITSUBISHI GAS CHEMICAL COMPANY, INC., product name S6007)) was used instead of the PVDC-A resin, and the thickness was 150 µm. The stability during extrusion and the cross-sectional fine appearance at this time were evaluated. In addition, adjustment to a thickness of 15 µm, which was 1/10 of the tube thickness, was made in the same manner using a melt extrusion machine, to obtain a single-layer film (substitute measurement film). The oxygen transmission rate and water vapor transmission rate of this substitute measurement film were measured.

### [Comparative Example 3]

The low density polyethylene (PE-A), an adhesive resin, an ethylene vinyl alcohol copolymer (EVOH), an adhesive resin, and the low density polyethylene (PE-A) were continuously extruded cylindrically in this order from the inside using melt extrusion equipment equipped with a coextrusion multilayer cylindrical die. Then, the extruded material was adjusted to an outer diameter of 10 mm in a cold water tank with an outer diameter sizing apparatus to obtain a five-layer tube having a thickness of 450 µm. The stability during extrusion and the cross-sectional fine appearance at this time were evaluated. In addition, adjustment to a total thickness of 45 µm, which was 1/10 of the tube thickness, was made in the same manner by coextrusion multilayer film molding equipment with the same thickness configuration ratio for layers to obtain a five-layer film (substitute measurement film). The oxygen transmission rate and water vapor transmission rate of this substitute measurement film were measured.

### [Comparative Example 4]

Adjustment to an outer diameter of 10 mm was made to obtain a five-layer tube having a thickness of 500 µm, as in Comparative Example 3 except that 150 µm of an intermediate layer composed of the MXD6 polyamide resin (PA) was used instead of 100 µm of the intermediate layer composed of the ethylene vinyl alcohol copolymer (EVOH).

### [Example 30]

A five-layer tube having an outer diameter of 10 mm and a thickness of 600 µm was obtained as in Example 12 except that a PVDC-F resin with vinylidene chloride (VDC)/methyl acrylate (MA) = 86/14 (% by mass) having a weight average molecular weight of 80,000 (manufactured by Asahi Kasei Corporation) and 20°C of Tg was used instead of the PVDC-A resin.

### [Example 31]

A five-layer tube having an outer diameter of 10 mm and a thickness of 600 µm was obtained as in Example 12 except that a PVDC-G resin with vinylidene chloride (VDC)/vinyl chloride (VC) = 99/1 (% by mass) having a weight average molecular weight of 80,000 (manufactured by Asahi Kasei Corporation) and -11°C of Tg was used instead of the PVDC-A resin.

**[Table 1]**

| | Cylindrical molded article configuration (cylinder inside ←→ outside) | | | | | Oxygen transmission rate (23°C·65% RH) | Water vapor transmission rate (38°C·90% RH) | Rate of decrease in oxygen transmission rate % | Storage test soy sauce Lab ΔE | Smell retention property evaluation | Stability during extrusion | Cross-sectional fine appearance |
|---|---|---|---|---|---|---|---|---|---|---|---|---|
| Example 1 | PVDC-A | - | - | - | - | 210 | 20 | 99 | 7 | ○ | ○ | ○ |
| | (300 µm) | | | | | (0.7) | (0.1) | | | | | |
| Example 2 | PVDC-B | - | - | - | - | 400 | 30 | 99 | 9 | ○ | ○ | ○ |
| | (300 µm) | | | | | (1.3) | (0.1) | | | | | |
| Example 3 | PVDC-C | - | - | - | - | 600 | 40 | 98 | 10 | ○ | ○ | ○ |
| | (300 µm) | | | | | (2.0) | (0.1) | | | | | |
| Example 4 | PVDC-A | - | - | - | - | 210 | 20 | 99 | 9 | ○ | ○ | ○ |
| | (100 µm) | | | | | (2.1) | (0.2) | | | | | |
| Example 5 | PVDC-A | - | - | - | - | 200 | 20 | 99 | 2 | ○ | ○ | ○ |
| | (500 µm) | | | | | (0.4) | (0.04) | | | | | |
| Example 6 | PE-A | PVDC-A | PE-A | - | - | 210 | 20 | 99 | 7 | ○ | ○ | ○ |
| | (150 µm) | (300 µm) | (150 µm) | | | (0.7) | (0.1) | | | | | |
| Example 7 | PE-A | PVDC-A | - | - | - | 210 | 20 | 99 | 7 | ○ | ○ | ○ |
| | (100 µm) | (300 µm) | | | | (0.7) | (0.1) | | | | | |
| Example 8 | PE-A | PVDC-B | PE-A | - | - | 400 | 40 | 98 | 9 | ○ | ○ | ○ |
| | (100 µm) | (300 µm) | (100 µm) | | | (20) | (2) | | | | | |
| Example 9 | PE-A | PVDC-B | - | - | - | 400 | 40 | 98 | 9 | ○ | ○ | ○ |
| | (100 µm) | (300 µm) | | | | (20) | (2) | | | | | |
| Example 10 | PE-B | PVDC-A | PE-B | - | - | 210 | 20 | 99 | 7 | ○ | ○ | ○ |
| | (100 µm) | (300 µm) | (100 µm) | | | (0.7) | (0.1) | | | | | |
| Example 11 | PE-B | PVDC-A | - | - | - | 210 | 20 | 99 | 7 | ○ | ○ | ○ |
| | (100 µm) | (300 µm) | | | | (0.7) | (0.1) | | | | | |

**[Table 2]**

| | Cylindrical molded article configuration (cylinder inside ←→ outside) | | | | | Oxygen transmission rate (23°C·65% RH) | Water vapor transmission rate (38°C·90% RH) | Rate of decrease in oxygen transmission rate % | Storage test soy sauce Lab ΔE | Smell retention property evaluation | Stability during extrusion | Cross-sectional fine appearance |
|---|---|---|---|---|---|---|---|---|---|---|---|---|
| Example 12 | PE-A | EVA-A | PVDC-A | EVA-A | PE-A | 210 | 20 | 99 | 7 | ○ | ○ | ○ |
| | (100 µm) | (50 µm) | (300 µm) | (50 µm) | (100 µm) | (0.7) | (0.1) | | | | | |
| Example 13 | PE-A | EVA-A | PVDC-B | EVA-A | PE-A | 400 | 30 | 99 | 9 | ○ | ○ | ○ |
| | (100 µm) | (50 µm) | (300 µm) | (50 µm) | (100 µm) | (1.3) | (0.1) | | | | | |
| Example 14 | PE-A | EVA-A | PVDC-C | EVA-A | PE-A | 600 | 40 | 99 | 10 | ○ | ○ | ○ |
| | (100 µm) | (50 µm) | (300 µm) | (50 µm) | (100 µm) | (2.0) | (0.1) | | | | | |
| Example 15 | PE-A | EVA-A | PVDC-D | EVA-A | PE-A | 500 | 35 | 99 | 9 | ○ | ○ | Δ |
| | (100 µm) | (50 µm) | (300 µm) | (50 µm) | (100 µm) | (1.7) | (0.1) | | | | | |
| Example 16 | PE-A | EVA-A | PVDC-E | EVA-A | PE-A | 200 | 20 | 99 | 6 | ○ | Δ | ○ |
| | (100 µm) | (50 µm) | (300 µm) | (50 µm) | (100 µm) | (0.6) | (0.1) | | | | | |
| Example 17 | PE-A | EVA-A | PVDC-A | - | - | 210 | 20 | 99 | 7 | ○ | ○ | ○ |
| | (70 µm) | (30 µm) | (300 µm) | | | (0.7) | (0.1) | | | | | |
| Example 18 | PE-A | EVA-B | PVDC-A | EVA-B | PE-A | 210 | 20 | 99 | 7 | ○ | ○ | ○ |
| | (100 µm) | (50 µm) | (300 µm) | (50 µm) | (100 µm) | (0.7) | (0.1) | | | | | |
| Example 19 | PE-A | EVA-B | PVDC-A | - | - | 210 | 20 | 99 | 7 | ○ | ○ | ○ |
| | (70 µm) | (30 µm) | (300 µm) | | | (0.7) | (0.1) | | | | | |
| Example 20 | PP-A | PVDC-A | PP-A | - | - | 210 | 20 | 99 | 7 | ○ | ○ | ○ |
| | (100 µm) | (300 µm) | (100 µm) | | | (0.7) | (0.1) | | | | | |
| Example 21 | PP-A | PVDC-A | - | - | - | 210 | 20 | 99 | 7 | ○ | ○ | ○ |
| | (100 µm) | (300 µm) | | | | (0.7) | (0.1) | | | | | |

**[Table 3]**

| | Cylindrical molded article configuration (cylinder inside ←→ outside) | | | | | Oxygen transmission rate (23°C·65% RH) | Water vapor transmission rate (38°C·90% RH) | Rate of decrease in oxygen transmission rate % | Storage test soy sauce Lab ΔE | Smell retention property evaluation | Stability during extrusion | Cross-sectional fine appearance |
|---|---|---|---|---|---|---|---|---|---|---|---|---|
| Example 22 | PP-A | Adhesive resin | PVDC-A | Adhesive resin | PP-A | 210 | 20 | 99 | 7 | ○ | ○ | ○ |
| | (120 µm) | (30 µm) | (300 µm) | (30 µm) | (120 µm) | (0.7) | (0.1) | | | | | |
| Example 23 | PP-A | Adhesive resin | PVDC-B | Adhesive resin | PP-A | 400 | 30 | 99 | 9 | ○ | ○ | ○ |
| | (120 µm) | (30 µm) | (300 µm) | (30 µm) | (120 µm) | (1.3) | (0.1) | | | | | |
| Example 24 | PP-A | Adhesive resin | PVDC-C | Adhesive resin | PP-A | 600 | 40 | 99 | 10 | ○ | ○ | ○ |
| | (120 µm) | (30 µm) | (300 µm) | (30 µm) | (120 µm) | (2.0) | (0.1) | | | | | |
| Example 25 | PP-A | Adhesive resin | PVDC-D | Adhesive resin | PP-A | 500 | 35 | 99 | 9 | ○ | ○ | Δ |
| | (120 µm) | (30 µm) | (300 µm) | (30 µm) | (120 µm) | (1.7) | (0.1) | | | | | |
| Example 26 | PP-A | Adhesive resin | PVDC-E | Adhesive resin | PP-A | 200 | 20 | 99 | 6 | ○ | Δ | ○ |
| | (120 µm) | (30 µm) | (300 µm) | (30 µm) | (120 µm) | (0.6) | (0.1) | | | | | |
| Example 27 | PP-B | Adhesive resin | PVDC-A | Adhesive resin | PP-B | 210 | 20 | 99 | 7 | ○ | ○ | ○ |
| | (120 µm) | (30 µm) | (300 µm) | (30 µm) | (120 µm) | (0.7) | (0.1) | | | | | |
| Example 28 | PP-A | Adhesive resin | PVDC-A | - | - | 210 | 20 | 99 | 7 | ○ | ○ | ○ |
| | (120 µm) | (30 µm) | (300 µm) | | | (0.7) | (0.1) | | | | | |
| Example 29 | PP-A | EVA-A | PVDC-A | Adhesive resin | EVOH | 160 | 18 | 98 | 5 | ○ | ○ | ○ |
| | (70 µm) | (30 µm) | (300 µm) | (30 µm) | (70 µm) | (0.4) | (0.5) | | | | | |

**[Table 4]**

| | Cylindrical molded article configuration (cylinder inside ←→ outside) | | | | | Oxygen transmission rate (23°C.65% RH) | Water vapor transmission rate (38°C.90% RH) | Rate of decrease in oxygen transmission rate % | Storage test soy sauce Lab ΔE | Smell retention property evaluation | Stability during extrusion | Cross-sectional fine appearance |
|---|---|---|---|---|---|---|---|---|---|---|---|---|
| Comparative Example 1 | EVOH | - | - | - | - | 150 | 1125 | 70 | 18 | × | ○ | ○ |
| | (50 µm) | | | | | (1) | (7.5) | | | | | |
| Comparative Example 2 | PA | - | - | - | - | 1500 | 7000 | 75 | 19 | × | ○ | ○ |
| | (150 µm) | | | | | (10) | (47) | | | | | |
| Comparative Example 3 | PE-A | Adhesive resin | EVOH | Adhesive resin | PE-A | 150 | 1050 | 70 | 16 | × | ○ | ○ |
| | (120 µm) | (30 µm) | (150 µm) | (30 µm) | (120 µm) | (1) | (7) | | | | | |
| Comparative Example 4 | PP-A | Adhesive resin | PA | Adhesive resin | PP-A | 1500 | 6000 | 78 | 18 | × | ○ | ○ |
| | (120 µm) | (30 µm) | (150 µm) | (30 µm) | (120 µm) | (10) | (40) | | | | | |
| Example 30 | PE-A | EVA-A | PVDC-F | EVA-A | PE-A | 600 | 40 | 99 | 13 | ○ | ○ | Δ |
| | (100 µm) | (50 µm) | (300 µm) | (50 µm) | (100 µm) | (2.0) | (0.1) | | | | | |
| Example 31 | PE-A | EVA-A | PVDC-G | EVA-A | PE-A | 120 | 10 | 99 | 4 | ○ | × | ○ |
| | (100 µm) | (50 µm) | (300 µm) | (50 µm) | (100 µm) | (0.4) | (0.1) | | | | | |

From Examples 1 to 31, it is found that when the oxygen transmission rates and the water vapor transmission rates are within the ranges of the present invention, the evaluation of the storage properties of the cylindrical molded articles is good. It is found that when a resin having better barrier properties is used as in Examples 1 and 5, the storage properties of the cylindrical molded articles are better. From Examples 1 to 20, it is found that the oxygen transmission rates and water vapor transmission rates of the vinylidene chloride copolymers are good whether they are used for single-layer tubes or films or multilayer tubes or films, and the evaluation of the storage properties of the cylindrical molded articles is also good. It is found that when the oxygen transmission rates and the water vapor transmission rates are outside the ranges of the present invention as in Comparative Examples 1 to 4, cylindrical molded articles satisfying storage properties are not obtained. From the comparison of Examples 30 and 31 with other Examples, it is found that by controlling the glass transition temperatures of the vinylidene chloride copolymers, the stability during extrusion and the cross-sectional fine appearance during cutting processing are also excellent.

This application is based on Japanese Patent Application No. 2016-021239 filed with the Japan Patent Office on February 5, 2016, the contents of which are incorporated herein by reference.

### Industrial Applicability

The cylindrical molded article of the present invention has industrial applicability as at least part of a container of which the storage properties of contents are required, such as a spout, a tube, or an body for storing ink.

## Claims

1. A cylindrical molded article comprising a resin layer comprising a barrier resin,
the barrier resin comprising a vinylidene chloride copolymer, and
the cylindrical molded article having a total thickness of 100 µm or more.

2. The cylindrical molded article according to claim 1, comprising an inside layer and an outside layer,
the inside layer comprising a polyolefin-based resin, and
the outside layer being the resin layer.

3. The cylindrical molded article according to claim 1, comprising an inside layer, one or more intermediate layers, and an outside layer,
the inside layer comprising a polyolefin-based resin, and
the outside layer and/or the intermediate layer being the resin layers.

4. The cylindrical molded article according to any one of claims 1 to 3, wherein a thickness of the resin layer comprising the barrier resin is 20% or more based on the total thickness of the cylindrical molded article.

5. The cylindrical molded article according to any one of claims 1 to 4, wherein the vinylidene chloride copolymer comprises a vinylidene chloride-methyl acrylate copolymer, and
a copolymerization ratio of the methyl acrylate is 3 to 9% by mass based on a total amount of the vinylidene chloride-methyl acrylate copolymer.
